# EUROPÄISCHE PATENTSCHRIFT

(11) **EP 2 992 615 B1**
(45) Veröffentlichungstag und Bekanntmachung des Hinweises auf die Patenterteilung: **12.06.2019**
(21) Anmeldenummer: 14721332.6
(22) Anmeldetag: 29.04.2014
(51) Int. Cl.: H04B 1/7163, H04B 1/717

(54) **EMPFÄNGER, ANORDNUNG UND VERFAHREN FÜR DIE ULTRABREITBAND-ÜBERTRAGUNG**
RECEIVER, ARRANGEMENT, AND METHOD FOR ULTRA-BROADBAND TRANSMISSION
RÉCEPTEUR, SYSTÈME ET PROCÉDÉ POUR LA TRANSMISSION ULTRA LARGE BANDE

(30) Priorität: 02.05.2013 DE 102013208080
(43) Veröffentlichungstag der Anmeldung: 09.03.2016
(73) Patentinhaber: IHP GmbH-Innovations for High Performance Microelectronics / Leibniz-Institut für innovative Mikroelektronik, 15236 Frankfurt / Oder (DE)
(72) Erfinder: METHFESSEL, Michael, 15230 Frankfurt (Oder) (DE); SARK, Vladica, 15234 Frankfurt (Oder) (DE); FISCHER, Gunter, 15236 Frankfurt (Oder) (DE)
(74) Vertreter: Eisenführ Speiser
(86) Internationale Anmeldenummer: PCT/EP2014/058739
(87) Internationale Veröffentlichungsnummer: WO 2014/177572

(56) Entgegenhaltungen:
- US-A1- 2004 087 291
- US-A1- 2006 114 969
- US-A1- 2011 260 757
- OH M-K ET AL: "A NEW NONCOHERENT UWB IMPULSE RADIO RECEIVER", IEEE COMMUNICATIONS LETTERS, IEEE SERVICE CENTER, PISCATAWAY, NJ, US, Bd. 9, Nr. 2, 1. Februar 2005 (2005-02-01) , Seiten 151-153, XP001223128, ISSN: 1089-7798, DOI: 10.1109/LCOMM.2005.02010 in der Anmeldung erwähnt

## Beschreibung

Die Erfindung betrifft einen Ultrabreitband-Empfänger zum Empfang und zur Verarbeitung von Ultrabreitbandimpulsen, eine Sender-Empfänger-Anordnung sowie ein Verfahren zur Kommunikation von Ultrabreitband-Signalen.

Ultrabreitband (engl. ultra wide band, UWB)-Kommunikationssysteme verwenden Sender, die kurze Funkimpulse mit einer geringen Abtastrate (engl. duty cycle) versenden. Die typische Impulsdauer liegt bei etwa 1 Nanosekunde. Ein typischer Zeitabstand zwischen aufeinanderfolgenden Impulsen beträgt mindestens 100 Nanosekunden. Die spektrale Verteilung solcher kurzer Impulse ist sehr breit und hat wesentliche Komponenten im Frequenzbereich oberhalb von 1 GHz.

UWB-Sender müssen behördlich festgelegte Anforderungen erfüllen, die in Europa vom Ausschuss für elektronische Kommunikation (engl. Electronic Communications Committee, ECC) und in den Vereinigten Staaten von der Federal Communications Comission (FCC) definiert werden. Diese Anforderungen sollen sicherstellen, dass Interferenzen mit konventionellen schmalbandigen Kommunikationssystemen und mit Navigations-Satellitensystemen wie GPS möglichst gering ausfallen. Die jeweils zuständigen Behörden haben sogenannte spektrale Masken definiert, welche die äquivalente isotrope Sendeleistung (engl. Equivalent Isotropically Radiated Power, EIRP) in bestimmten Frequenzbereichen definieren. Beispielsweise beinhaltet die spektrale Maske der FCC, dass die EIRP im Frequenzbereich zwischen 3,1 und 10,6 GHz unterhalb von - 41,3 dBm/MHz liegen muss, und in den angrenzenden Frequenzbereichen, also von 1,6 bis 3,1 sowie oberhalb von 10,6 GHz, unterhalb von -53 dBm/MHz. Das Verhältnis von Spitzenleistung zu Durchschnittsleistung darf nicht größer als 20 dB sein. Dies bedeutet, dass die mittlere Sendeleistung auf etwa 0,5 mW begrenzt ist, und dass ein Einzelimpuls eine maximale Leistung von 50 mW haben darf.

Als wesentliche Herausforderung erweist sich, eingehende Impulse zuverlässig beim Empfänger zu identifizieren. Insbesondere müssen die eingehenden Impulse vom Rauschen und von Sendesignalen anderer Kommunikationssysteme unterschieden werden. Theoretisch ist die beste Verfahrensweise zur Identifizierung von Ultrabreitband-Impulsen die Berechnung einer Kreuzkorrelation des eingehenden Signals mit einer vordefinierten Impulsform. Diese Kreuzkorrelation zeigt als Funktion der Zeit einen Peak, wenn ein Signalimpuls in zeitlicher Übereinstimmung mit einem festen, im Empfänger abgespeicherten Musterimpuls ist, welcher mit dem gesendeten Impuls identisch ist. Empfänger, die die Kreuzkorrelation in dieser Form auswerten, werden als kohärente Empfänger bezeichnet.

Einfachere, alternative Empfangs-Verfahren detektieren Impulse ohne detaillierte Auswertung der genauen Impulsform. Solche Verfahren sind weniger leistungsfähig. Beispielsweise kann ein Energiedetektionsschaltkreis verwendet werden, der Peaks der empfangenen Sendeleistung ermittelt. Empfänger, die auf solchen oder ähnlichen Prinzipien basieren, werden als nicht-kohärente Empfänger bezeichnet.

Ein nicht-kohärenter Empfänger für Ultrabreitbandimpulse ist beispielsweise aus der Veröffentlichung US 8,098,707 B2 bekannt. Er umfasst einen Bandpass-Filter, einen ihm nachgeschalteten Verstärker und einen Xⁿ-Block oder einen e^{X}-Block. Der Xⁿ-Block wandelt ein anliegendes Signal X in seine n-te Potenz, wobei n=2, 4, 6, ....Das Ausgangssignal entspricht also AXⁿ, wobei A eine Konstante ist. Der e^{X}-Block wandelt ein anliegendes Signal X in ein Ausgangssignal entsprechend Be^{X}, wobei B wiederum eine Konstante ist. Diesem Block folgt im Empfänger der US 8,098,707 B2 eine Integrationseinheit, die das Ausgangssignal des Xⁿ-Blocks oder des e^{X}-Blocks über eine bestimmte Zeitspanne integriert und das Integrationsergebnis ausgibt. Ein Entscheidungsblock bestimmt anschließend anhand des Integrationsergebnisses einen Bitwert, den das empfangene Ultrabreitband-Signal übermittelt.

Kohärente Empfänger zeichnen sich durch ihre hohe Leistungsfähigkeit aus. Die Berechnung der Kreuzkorrelation des eingehenden Signals mit einem Muster-Impuls vorgegebener Pulsform erfordert jedoch einen erheblichen Hardware- und Berechnungsaufwand bei den im Stand der Technik bekannten Empfängern. Zwei Vorgehensweisen sind bekannt. Eine erste Vorgehensweise nutzt einen analogen Kreuzkorrelator. Hier bestimmt ein Multiplizierer/Integrator die Kreuzkorrelation zwischen dem empfangenen Signal und dem Muster-Impuls, der zu einem bestimmten Zeitpunkt ausgelöst wird. Nachteilig ist, dass nur ein einzelner Wert der Kreuzkorrelation ermittelt wird. Dieser Wert entspricht der Kreuzkorrelation an dem Zeitpunkt, zu welchem der Muster-Impuls ausgelöst wird. Es muss also entweder vorab bekannt sein, zu welchem Zeitpunkt ein Signalimpuls zu erwarten ist, oder es muss eine Vielzahl unabhängiger Kopien der betreffenden Schaltung verwendet werden. Mit diesen Schaltungskopien werden Musterimpulse zu gegeneinander versetzten Zeitpunkten erzeugt. Dies ermöglicht es, den Empfang von Signalimpulsen zu verschiedenen Zeitpunkten bzw. mit verschiedenen Zeitverzögerungen gegenüber einem erwarteten Zeitpunkt zu erfassen.

Als Alternative kann ein digitaler Korrelator verwendet werden. Hierbei wird das eingehende Signal digitalisiert und einem Schieberegister zugeführt. Das Schieberegister ist ausreichend lang, um einen Signalimpuls aufzunehmen. Dies ermöglicht es, eine Kreuzkorrelation in einfacher Weise zu bestimmen, indem das eingehende Signal und der Musterimpuls miteinander multipliziert werden und das zeitliche Integral ermittelt wird. Auf diese Weise wird ein kontinuierlich aktualisierter Wert der Kreuzkorrelation als Funktion der Zeit bestimmt. Ein Signalimpuls kann durch eine Peak-Ermittlung selbst ohne Vorabwissen über die zu erwartende Pulsposition ermittelt werden. Diese Lösung hat jedoch den Nachteil, dass ein erheblicher Schaltungsaufwand mit digitalen Schaltkreisen notwendig ist. Diese Schaltkreise müssen mit einer hohen Abtastrate betrieben werden.

US 2004/087291 A1 beschreibet eine Empfangseinheit, die ein UWB-Signal einer Bandbreite von ca. 1 GHz über eine Luftschnittstelle empfängt und es in ein Empfangssignal wandelt. Der Empfänger hat zwei SAW-Optimalfilter.

Gemäß einem ersten Aspekt der vorliegenden Erfindung wird ein kohärenter Ultrabreitband-Empfänger zur Detektion von Ultrabreitbandimpulsen in einem empfangenen UItrabreitbandsignal bereitgestellt, umfassend:
- eine Empfangseinheit, die ausgebildet ist, ein Ultrabreitbandsignal mit einer Frequenzbandbreite von mindestens 1 GHz über eine Luftschnittstelle zu empfangen und in ein Empfangssignal zu wandeln;
- einen Korrelator in Form eines passiven Filters, dem das Empfangssignal zugeführt ist und das ausgebildet ist, das Empfangssignal mit alleiniger Hilfe passiver Bauelemente, also Widerständen, Kondensatoren oder Spulen, zu filtern und an seinem Ausgang als ein entsprechend
   deren Zeitinvertierte eine vom Ultrabreitband-Empfänger detektierbare Impulsform eines Ultrabreitbandimpulses definiert,
- wodurch das passive Filter ausgebildet ist, als das gefilterte Empfangssignal ein Kreuzkorrelationssignal als Funktion der Zeit bezüglich eines Zeitbezugspunktes zu erzeugen und auszugeben, das einer Kreuzkorrelation des Empfangssignals mit der detektierbaren Impulsform des Ultrabreitbandimpulses entspricht.

Mit dem erfindungsgemäßen kohärenten Empfänger gelingt im Vergleich mit den eingangs erläuterten, aus dem Stand der Technik bekannten kohärenten Empfängerkonstruktionen eine besonders einfache Implementierung eines kohärenten Empfängers, welcher darüber hinaus kontinuierlich den Wert der Korrelation als Funktion der Zeit bestimmt. Denn der Empfänger hat einen Korrelator, dessen Optimalfilter (engl. matched filter) ein passives Filter ist. Unter einem passiven Filter wird im Rahmen dieser Anmeldung ein Netzwerk aus passiven Bauelementen (Widerständen, Kondensatoren oder Spulen) verstanden. Das passive Filter allein definiert bei der vorliegenden Erfindung eine vom Ultrabreitband-Empfänger detektierbare Impulsform eines Ultrabreitbandimpulses. Das passive Filter erspart somit insbesondere die im Stand der Technik erforderliche Bereitstellung eines Musterimpulses mit der detektierbaren Impulsform, weil das passive Filter allein aufgrund seiner erfindungsgemäß definierten Impulsantwort das Empfangssignal in ein Ausgangssignal wandelt, das der Kreuzkorrelation des Empfangssignals mit einem Musterimpuls der vordefinierten detektierbaren Impulsform entspricht. Der Klarheit halber sei jedoch nochmals betont, dass erfindungsgemäß ein solcher Musterimpuls nicht bereitgestellt wird. Es ist daher also weder erforderlich noch vorgesehen, die detektierbare Impulsform in Form eines abgespeicherten Musterimpulses in einer Speichereinheit des Empfängers vorzuhalten. Eine solche Speichereinheit für einen Musterimpuls wird nicht benötigt. Es sind auch keine (digitalen oder analogen) Berechnungen für die Ermittlung des Kreuzkorrelationssignals vonnöten. Der im erfindungsgemäßen kohärenten Empfänger eingesetzte Korrelator ist also gegenüber bekannten Lösungen ganz wesentlich vereinfacht, indem er in Form eines passiven Filters realisiert ist. Als weiterer Vorteil wird die Korrelation fortlaufend für das zu jedem Zeitpunkt empfangene Signal bestimmt, wodurch ein eingehender Impuls einfach identifiziert werden kann, auch wenn empfängerseitig kein Wissen über den erwarteten Empfangszeitpunkt vorliegt.

Die Erfindung wendet sich von herkömmlichen Entwurfskonzepten für Ultrabreitband-Kommunikationssysteme ab und ermöglicht so diese gegenüber bekannten kohärenten Empfängern so deutlich vereinfachte Empfängerstruktur. Das an sich bekannte Konzept des Optimalfilters fordert, dass die Struktur des vom Sender ausgesendeten Signals beim Empfänger bekannt sein muss. Dieses Konzept wird im Stand der Technik in der Weise verwendet, dass empfängerseitige Filterstrukturen den senderseitigen Vorgaben einer Impulsform von Ultrabreitbandimpulsen angepasst werden. Der Empfänger speichert in solchen bekannten Strukturen die erwartbare Musterimpulsform in einem Speicher ab und zieht sie für eine Berechnung der Kreuzkorrelation durch Multiplikation mit unterschiedlichen Zeitversetzungen und eine Integration durch einen entsprechend aufwändig ausgestatteten Korrelator heran. Die vorliegende Erfindung beruht im Gegensatz dazu auf einer empfängerseitig definierten Impulsform. Diese ist durch die Zeitinvertierte der Impulsantwort des passiven Filters festgelegt. Impulse mit dieser Impulsform werden vom Ultrabreitband-Empfänger im Sinne der matched-filter Theorie optimal detektiert und weiter verarbeitet. Auf der Grundlage dieser Umkehrung des Entwurfskonzeptes gelingt die wesentliche Vereinfachung des Korrelators im Empfänger.

Die vorliegende Erfindung löst also eine für einen kohärenten UWB Empfänger zentrale Aufgabe, nämlich die Korrelation des empfangenen Signals mit der der vorgegebenen Impulsform zu bestimmen. Es versteht sich, dass in weiter unten beschriebenen Ausführungsbeispielen des erfindungsgemäßen kohärenten Empfängers weitere Funktionseinheiten vorgesehen sind. Solche andere Schaltkreise wie z. B. ein Eingangsverstärker, eine Peak-Detektions-Einheit oder eine Demodulationseinheit sind typischerweise zusätzlich zum Korrelator in einem Empfänger vorgesehen. Implementierungen solcher zusätzlicher Einheiten sind als solche im Stand der Technik bekannt.

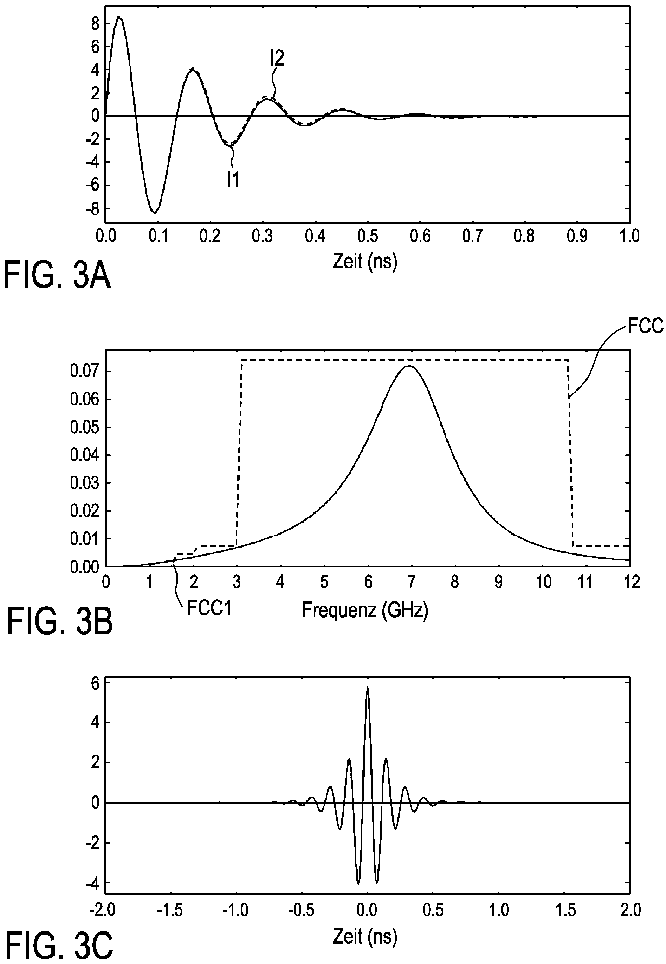

Es wird angemerkt, dass der Begriff des Optimalfilters (engl. "matched filter") in der Fachwelt mit unterschiedlichen Bedeutungen verwendet wird. Beispielsweise beschreiben das US-Patent US8098707 (Harjani et al.) und die Publikation "A New Noncoherent UWB Impulse Radio Receiver" (Oh, Jung, Harjani, IEEE. Comm. Lett. 9, Seite 151, 2005) einen UWB Empfänger unter Verwendung des Begriffes "matched filter." Jedoch geht aus der detaillierten Beschreibung in der Publikation, insbesondere aus der in der dortigen Fig. 3 abgebildeten Impulsform und aus dem der näheren Beschreibung hervor, dass es sich bei diesem Filter nicht um einen Optimalfilter im Sinne der Verwendung des Begriffs im Rahmen dieser Anmeldung, sondern tatsächlich um einen Bandpassfilter (BPF) handelt, dessen absolute Spektralverteilung sich an der des Impulses und der vorgeschriebenen Spektralmaske orientiert. Dieses Filterkonzept entspricht aber nicht einem Optimalfilter, dessen Impulsantwort die Zeitumgekehrte des Impulses ist. Der Bandpassfilter wird dort vielmehr in Ergänzung zur Verbesserung der Systemeigenschaften eingesetzt, jedoch nicht, um die eigentliche Auswertung einer Kreuzkorrelation durchzuführen.

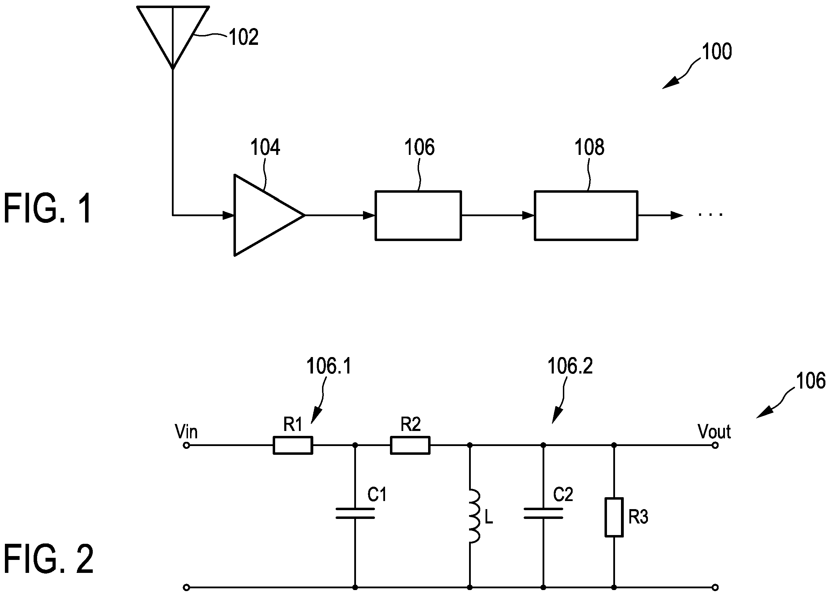

In der Veröffentlichung US 2009/0075590 wird in der dortigen Fig. 1A ein UWB Empfänger vorgestellt, in welchem das Signal einen dort so genannten "matched filter (300)" durchläuft. Die weitere Beschreibung im Zusammenhang mit der dortigen Fig. 3 zeigt, dass hier der Begriff "matched filter" tatsächlich aber in dem Sinne verwendet wird, dass ein Musterimpuls oder "template" zu einem gewissen Zeitpunkt generiert wird, dessen Kreuzkorrelation mit dem Eingangssignal für diesen Zeitpunkt ausgewertet wird. Dies ist jedoch nichts anderes, als weiter oben als Stand der Technik bereits dargestellt.

Gemäß einem Verfahrensaspekt stellt die vorliegende Erfindung ein Verfahren zur Kommunikation von Ultrabreitband-Impulsen bereit, umfassend
- Bereitstellen eines Empfängers gemäß dem grundlegenden Aspekt der Erfindung oder gemäß dem ersten Aspekt der Erfindung oder ihrer im Rahmen dieser Anmeldung offenbarten Ausführungsformen;
- nachfolgend: senderseitiges Erzeugen und Ausgeben des Ultrabreitband-Impulses in Form eines Ultrabreitband-Signals über eine senderseitige Luftschnittstelle, der eine Impulsform als Funktion der Zeit hat, deren Fourier-Transformierte einen Betrag im Quadrat als Funktion der Frequenz aufweist, der eine vordefinierte spektrale Maske, insbesondere eine spektrale Maske gemäß FCC- oder ECC-Anforderungen nicht überschreitet, und die die Zeitinvertierte der Impulsantwort des passiven Filters des Empfängers darstellt,
- Empfangen des Ultrabreitband-Signals und Filtern eines daraus erzeugten Empfangssignals mit Hilfe des passiven Filters, wobei das passive Filter das Empfangssignal mit alleiniger Hilfe passiver Bauelemente, also Widerständen, Kondensatoren oder Spulen filtert und an seinem Ausgang ein entsprechend gefiltertes Empfangssignal ausgibt, das als Funktion der Zeit bezüglich eines Zeitbezugspunktes einer Kreuzkorrelation des Empfangssignals mit der detektierbaren Impulsform des Ultrabreitbandimpulses entspricht.

Das erfindungsgemäße Verfahren teilt die Vorteile des Empfängers gemäß dem ersten Aspekt der vorliegenden Erfindung.

Nachfolgend werden Ausführungsbeispiele des erfindungsgemäßen Empfängers und des erfindungsgemäßen Verfahrens beschrieben. Die zusätzlichen Merkmale unterschiedliche Ausführungsbeispiele können zur Bildung weiterer Ausführungsformen miteinander kombiniert werden, soweit sie nicht ausdrücklich als nicht kombinierbare Alternativen zueinander beschrieben sind.

In einer Ausführungsform hat der Empfänger zusätzlich eine Pulsidentifikationseinheit, welcher das Kreuzkorrelationssignal zugeführt ist und die ausgebildet ist, eine für eine Amplitude des Kreuzkorrelationssignals als Funktion der Zeit repräsentative Messgröße zu ermitteln und ein Maximum der Amplitude des Kreuzkorrelationssignals sowie bezüglich des Zeitbezugspunktes einen Zeitpunkt zu ermitteln und auszugeben, an dem das Maximum der Amplitude des Kreuzkorrelationssignals auftritt. Vorzugsweise erfasst die Pulsidentifikationseinheit eine der Energie des Empfangssignals über seine gesamte Bandbreite entsprechende Messgröße.

Bei einem besonders einfachen Ausführungsbeispiel enthält das passive Filter mindestens ein Tiefpassfilter und einen mit dem Tiefpassfilter gekoppelten gedämpften Resonator, die zur Filterung und somit zugleich zum Erzeugen des Kreuzkorrelationssignals dienen. Der Resonator dieser Ausführungsform des passiven Filters ist vorzugsweise auf eine Mittenfrequenz der spektralen Maske abgestimmt.

Eine bevorzugte, mit den vorstehenden Ausführungsbeispielen des passiven Filters sehr einfach realisierbare Impulsantwort des passiven Filters hat eine Zeitinvertierte, die einem Produkt einer Sinuswelle mit einer als Funktion der Zeit ansteigenden Exponentialfunktion entspricht. Solche Impulsformen sind senderseitig gut erzeugbar, wenn auch mit etwas größerem technischen Aufwand als die im Stand der Technik häufig verwendeten gaußförmigen oder gaußförmig amplitudenmodulierten Impulse.

Eine Weiterbildung der Erfindung bildet eine Ultrabreitband-Kommunikations-Anordnung, umfassend
- einen kohärenten Ultrabreitband-Empfänger zur Detektion von Ultrabreitbandimpulsen in einem empfangenen Ultrabreitbandsignal gemäß dem ersten Aspekt der Erfindung oder einem seiner in dieser Beschreibung oder den Ansprüchen offenbarten Ausführungsbeispiele;
- einen Ultrabreitband-Sender, der ausgebildet ist, Ultrabreitbandimpulse zu erzeugen, die eine Impulsform haben, deren Fourier-Transformierte einen Betrag im Quadrat als Funktion der Frequenz aufweist, die ein als vordefinierte spektrale Maske, insbesondere eine spektrale Maske gemäß FCC- oder ECC-Anforderungen definiertes Amplitudenspektrum nicht überschreitet, und die eine Zeitinvertierte der Impulsantwort des passiven Filters des Ultrabreitband-Empfängers darstellt.

Mit einer solchen Anordnung gelingt die Ultrabreitband-Kommunikation von Ultrabreitbandimpulsen unter gegenüber dem Stand der Technik stark reduziertem Hardware-Aufwand auf der Empfängerseite. Solche Anordnungen werden in unterschiedlichen Ausführungsbeispielen der vorliegenden Erfindung als Anordnung zur Informationsübermittlung, also Sprach- oder Datenkommunikation oder als Anordnung zur Abstandsbestimmung oder Ortung (letztere insbesondere unter Verwendung mehrerer Ultrabreitband-Empfänger) verwendet. Der jeweilige Anwendungszweck bestimmt die an sich bekannten, weitere Ausstattung der Ultrabreitband-Sender und -Empfänger jenseits der im Rahmen dieser Anmeldung beschriebenen Technologie zur senderseitigen Erzeugung und empfängerseitigen Identifikation von Ultrabreitband-Impulsen.

Der Hardware-Aufwand auf der Senderseite ist zwar in hier beschriebenen Ausführungsbeispielen geringfügig größer als in den Sendern, die im Stand der Technik für die Ultrabreitband-Kommunikation verwendet werden. Bei einer Gesamtbetrachtung des Hardware-Aufwandes für Sender und Empfänger ist die vorliegende erfindungsgemäße Anordnung jedoch deutlich einfacher und daher kostengünstiger herstellbar. Desweiteren führt sie zu einer Reduzierung des gemittelten Energieverbrauches, da der Empfänger im allgemeinen durchgehend aktiv ist und daher eine Reduzierung seines Energieverbrauches im Gesamtsystem besonders vorteilhaft ist. Weiter unten wird dies anhand von Ausführungsbeispielen im Zusammenhang mit der Figurenbeschreibung näher erläutert.

Ein Beispiel eines für die Ultrabreitband-Kommunikations-Anordnung geeigneten Ultrabreitband-Senders umfasst eine Impulserzeugungseinheit, die ausgebildet ist, in Reaktion auf ein von einer Steuereinheit empfangenes Steuersignal einen Impuls einer vordefinierten Hüllkurven-Signalform zu erzeugen, und eine Modulationseinheit, die ausgebildet ist, die von der Impulserzeugungseinheit erzeugte Hüllkurven-Signalform mit einer sinusförmigen Signalform zu modulieren.

In einer Implementierung dieser Ausführungsform
- hat die Modulationseinheit des Senders eine mit einem lokalen Oszillator verbundene Phasenregelschleife,
- enthält eine Frequenzteilereinheit der Phasenregelschleife zwei in Reihe geschaltete Frequenzteiler, zwischen denen ein Rechteckpuls-Signal abgreifbar ist,
- ist eine mit der Phasenregelschleife verbundene steuerbare Torschaltung ausgebildet, in Reaktion auf das Steuersignal eine einzelne Halbwelle des Rechteckpuls-Signals an ihrem Ausgang auszugeben;
- ist eine mit der Torschaltung verbundene Impulsformungseinheit ausgebildet, eine vordefinierte Impulsform auszugeben, deren Dauer mit der zeitlichen Dauer des Anliegens der Halbwelle identisch ist,
- und weist die Modulationseinheit einen Multiplizierer auf, der ausgebildet ist, an seinem Ausgang ein Produktsignal auszugeben, das dem Produkt der von der Impulsformungseinheit ausgegebenen Impulsform mit einem von der Phasenregelschleife erzeugten harmonisch oszillierenden Signal entspricht.

Nachfolgend werden also anhand der Figuren weitere Ausführungsbeispiele der Erfindung erläutert. Es zeigen:
Fig. 1 ein vereinfachtes Blockschaltbild eines Teils eines erfindungsgemäßen kohärenten Ultrabreitband-Empfängers;
Fig. 2 ein Ausführungsbeispiel eines passiven Filters zur Verwendung eines Optimalfilter in dem Empfänger der Fig. 1;
Fig. 3 zeigt in den Teilfiguren 3A bis 3C eine Impulsantwort des passiven Filters der Fig. 2, ein Leistungsspektrum des passiven Filters der Fig. 2 sowie eine Autokorrelationsfunktion h(t) des passiven Filters der Fig. 2;
Fig. 4 ein vereinfachtes Blockschaltbild eines Ultrabreitband-Senders zur Verwendung in einer Ultrabreitband-Kommunikations-Anordnung mit einem kohärenten Ultrabreitband-Empfänger gemäß der vorliegenden Erfindung;
Fig. 5 zeigt in den Teilfiguren 5A bis 5E verschiedene Signalformen, die im Sender der Fig. 5 an den Positionen A bis E abzugreifen sind; und
Fig. 6 in ihren Teilfiguren A, B und C ein Ultrabreitband-Signal in Form zweier Ultrabreitband-Impulse, das Signal der Figur 6A nach Hinzufügen von weißem Rauschen mit einer Amplitude, die die Ultrabreitband-Impulse verdeckt und ein Kreuzkorrelationssignal eines Empfängers mit einem passiven Filter in ähnlicher Form wie Fig. 2 mit veränderten Parameterwerten.

Fig. 1 zeigt ein vereinfachtes Blockschaltbild eines Teils eines erfindungsgemäßen kohärenten Ultrabreitband-Empfängers. Eine Antenne 102, die eine Luftschnittstelle des Empfängers 100 bildet, ist ein rauscharmer Verstärker (low-noise amplifier) nachgeschaltet. Dem rauscharmen Verstärker 104 folgt im Signalpfad ein passives Filter 106. Der Ausgang des passiven Filters 106 ist mit einer Pulsidentifikationseinheit 108 verbunden. Nachfolgende Einheiten des Empfängers 100, die der Demodulation und weiteren Verarbeitung des empfangenen Ultrabreitband-Signals dienen, sind vorliegend der Einfachheit halber nicht dargestellt. Der Fachmann kennt diese nachfolgenden Einheiten aus dem Stand der Technik.

Im Betrieb wird das von der Antenne 102 empfangene Ultrabreitband-Signal vom rauscharmen Verstärker 104 verstärkt und dem Korrelator in Form des passiven Filters 106 zugeführt. Das passive Filter gibt an seinem Ausgang ein gefiltertes Empfangssignal aus, das einem Kreuzkorrelationssignal als Funktion der Zeit bezüglich eines Zeitbezugspunktes entspricht. Das Kreuzkorrelationssignal entspricht der Kreuzkorrelation des Empfangssignals mit der detektierbaren Impulsform des Ultrabreitband-Impulses. Dies beruht darauf, dass die Impulsantwort des passiven Filters die zeitliche Umgekehrte der gesendeten Impulsform ist.

Fig. 2 zeigt ein Schaltbild eines Ausführungsbeispiels eines passiven Filters zur Verwendung als Optimalfilter im Empfänger der Fig. 1 Der Schaltkreis des passiven Filters hat eine Tiefpassstufe 106.1. Diese wird von einem Widerstand R1 und einem Kondensator C1 gebildet. Über einen Verbindungswiderstand R2 ist die Tiefpassstufe 106.1 mit einem gedämpften Resonator 106.2 verbunden. Dieser Resonator umfasst eine Parallelschaltung einer Spule L, eines Kondensators C2 und eines ohmschen Widerstandes R3. Im Betrieb liegt das vom rauscharmen Verstärker 104 ausgegebene Signal über den Widerstand R1 am Kondensator der Tiefpassstufe 106.1 an. Das Ausgangssignal wird parallel zum gedämpften Resonator 106.2 abgegriffen und der Pulsdetektion 108 zugeleitet.

Die Tiefpassstufe 106.1 verschiebt die Phase des Empfangssignals. Dies dient dazu, dass die Autokorrelationsfunktion h(t) für einen Zeitbezugspunkt t=0 den Wert 0 annimmt. Varianten des passiven Filters 106 der Fig. 2 enthalten weitere Tiefpassstufen, Auf diese Weise können zusätzlich höhere Ableitungen des Empfangssignals bei Bedarf am Bezugszeitpunkt t=0 auf den Wert 0 gesetzt werden. Dies geschieht in solchen Varianten jedoch auf Kosten einer stärkeren Signalabschwächung, welche durch mit bekannten Maßnahmen in der Verstärkerstufe zu kompensieren ist.

Der Resonator 106.2 ist auf eine Frequenz abgestimmt, die in der Mitte oder nahe der Mitte des erlaubten Ultrabreitband-Frequenzbandes liegt. Der Widerstand R3 des gedämpften Resonators 106.2 führt zu einer starken Dämpfung, mit dem Ziel, einen breiten Peak im Frequenzspektrum des passiven Filters und damit eine kurze Impulsdauer zu erzielen. Beispielhafte Werte der Bauelemente des passiven Filters 106 sind wie folgt: R1=5Ω, C1 = 40 pF, R2 = 20 Ω, C2 = 10 pF, L=50 pH und R3 = 10 Ω.

Fig. 3 zeigt in den Teilfiguren 3A - 3C eine Impulsantwort des passiven Filters der Fig. 2, ein Leistungsspektrum des passiven Filters der Fig. 2 sowie eine Autokorrelationsfunktion h(t) des Impulses aus Fig. 3A.

Fig. 3A zeigt eine Impulsantwort I1 des passiven Filters der Fig. 2 bei Verwendung der oben angegebenen Dimensionierung der einzelnen Bauelemente. Dargestellt ist eine Amplitude der Impulsantwort in beliebigen linearen Einheiten als Funktion der Zeit in Nanosekunden. Die Impulsantwort bildet eine gedämpfte Schwingung mit einer Periodendauer von etwa 140 Pikosekunden. Wie bereits erwähnt, führt die gewählte Dimensionierung dazu, dass die Impulsantwort zum Zeitpunkt t = 0 bei einer Amplitude von 0 startet. Die Maxima der gedämpften Schwingung sind nach etwa 800 Pikosekunden streng genommen nur nahezu abgeklungen, im wesentlichen jedoch vollständig abgeklungen.

Das in Fig. 3B dargestellte Leistungsspektrum entspricht dem Betrag des Quadrats der Fourier-Transformierten der in Fig. 3A dargestellten Impulsantwort. Sie ist in Fig. 3B als spektrale Leistungsdichte in linearen Einheiten von µW pro MHz als Funktion der Frequenz in GHz dargestellt. Dabei wurde die Amplitude skaliert, um die Leistungsdichte unterhalb der in den U.S.A. vorgeschriebenen FCC-Maske einzuhalten. Dieses kann senderseitig durch eine Regelung der Ausgangsleistung des Senders erreicht werden, welche die erlaubte Maske optimal ausschöpft. Exemplarisch für alle bekannten vordefinierten Anforderungen an das Amplitudenspektrum (also alle spektralen Masken) ist in Fig. 3B die FCC-Maske für das maximale EIRP (equivalent isotropic radiated power) für den Anwendungsfall "indoor communication" (vgl. Tabelle 1) als gestrichelte Linie eingezeichnet. Man beachte die hier gewählte lineare Darstellung der Maskenwerte, im Gegensatz zur häufig verwendeten logarithmischen Darstellung. In anderen Ländern und für andere Anwendungsfälle sind leicht abgewandelte Masken relevant. Eine Zusammenstellung vorgeschriebener Masken findet man z. B. in dem Dokument "Spectrum Allocations for Wide Band Communication Devices", ISBN 978-0-478-31641-4 von M. Ohanga (2008), veröffentlicht von der Radio Spectrum Policy and Planning Group, Energy and Communications Branch, Ministry of Economic Development, PO Box 1473, Wellington, New Zealand, 2008. In die vorliegende Offenbarung durch Bezugnahme mit aufgenommen werden insbesondere die folgenden im Anhang dieser Veröffentlichung in Form von Tabellen und Figuren definierten Anforderungen:
a)Appendix A, Seiten 20 und 21: USA FCC Emissionsgrenzen: Tabellen 1 und 2 (auch nachfolgend in den Tabellen 1 und 2 wiedergegeben) sowie Figuren 1 und 2,
b)

**Tabelle 1 - FCC-Emissionsgrenzen für Kommunikationssysteme im Innenbereich von Gebäuden**

| Frequenz (MHz) | Strahlungsleistung (EIRP) |
|---|---|
| 960-1610 | -75,3 dBm/MHz |
| 1610-1990 | -53,3 dBm/MHz |
| 1990-3100 | -51,3 dBm/MHz |
| 3100-10600 | -41,3 dBm/MHz |
| Über 10600 | -51,3 dBm/MHz |

**Tabelle 2 - FCC -Emissionsgrenzen für mobile Kommunikationssysteme im Außenbereich**

| Frequenz (MHz) | Strahlungsleistung (EIRP) |
|---|---|
| 960-1610 | -75,3 dBm/MHz |
| 1610-1990 | -63,3 dBm/MHz |
| 1990-3100 | -61,3 dBm/MHz |
| 3100-10600 | -41,3 dBm/MHz |
| Über 10600 | -61,3 dBm/MHz |

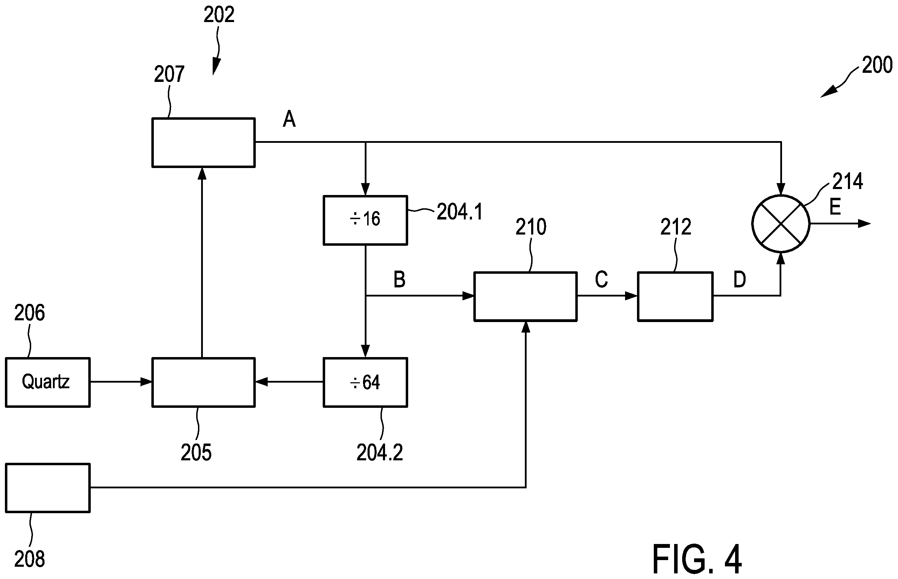

b) Appendix B, Seite 22: Europäische Emissionsgrenzen (ECC), Figur 3 und Figur 4 (letztere ist nachfolgend in Tabelle 3 wiedergegeben,)
Maximale Strahlungsleistungs(EIRP)-Grenzwerte

**Tabelle 3 - Europäische Emissionsgrenzen gemäß ECC**

| Frequenzbereich | Maximaler Mittelwert der spektralen Strahlungsleistungsdichte (EIRP) (dBm/MHz) | Maximaler Spitzenwert der Strahlungsleistung (EIRP) (gemessen in 50 MHz) |
|---|---|---|
| Unter 1,6 GHz | -90 dBm/MHz | -50 dBm |
| 1,6 bis 2,7 GHz | -85 dBm/MHz | -45 dBm |
| 2,7 bis 3,4 GHz | -70 dBm/MHz | -36 dBm |
| 3,4 bis 3,8 GHz | -80 dBm/MHz | -40 dBm |
| 3,8 bis 4,2 GHz | -70 dBm/MHz | -30 dBm |
| 4,2 bis 4,8 GHz | -70 dBm/MHz | -30 dBm |
| 4,8 bis 6 GHz | -70 dBm/MHz | -30 dBm |
| 6 bis 8,5 GHz | -41,3 dBm/MHz | 0 dBm |
| 8,5 bis 10,6 GHz | -65 dBm/MHz | -25 dBm |
| Über 10,6 GHz | -85 dBm/MHz | -45 dBm |

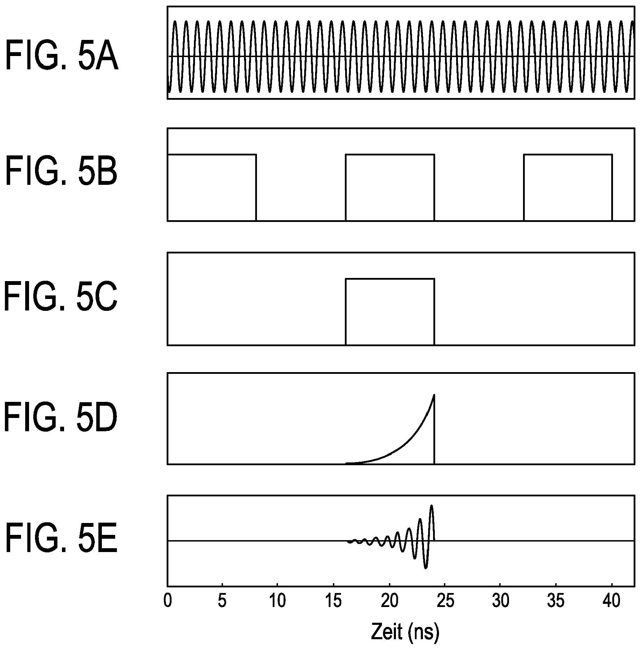

Diese in Europa geltenden Werte entstammen Veröffentlichung "Amended ECC/DEC(06)04.
c) Appendix C, Seite 23: Emissionsgrenzen für Deutschland: Figur 5 (auch nachfolgend in Tabelle 4 wiedergegeben)

**Tabelle 4: Emissionsgrenzen für Deutschland**

| Frequenzbereich | Maximaler Mittelwert der spektralen Leistungsdichte | | Maximaler Spitzenwert der Leistung | |
|---|---|---|---|---|
| GHz | Pikowatt/MHz (EIRP) | dBm/MHz (EIRP) | Nanowatt (EIRP) | dBm (EIRP) |
| 0,03-1,6 | 1 | -90,0 | 10 | -50,0 |
| 1,6-2,7 | 3,16 | -85,0 | 31,6 | -45,0 |
| 2,7-3,4 | 100 | -70,0 | 251 | -36,0 |
| 3,4-3,8 | 10 | -80,0 | 100 | -40,0 |
| 3,8-4,2 | 100 | -70,0 | 1000 | -30,0 |
| 4,2-4,8 | 100 | -70,0 | 1000 | -30,0 |
| 4,8-6,0 | 100 | -70,0 | 1000 | -30,0 |
| 6,0-8,5 | 74100 | -41,3 | 1000000 | 0 |
| 8,5-10,6 | 316 | -65,0 | 3160 | -25,0 |
| > 10,6 | 3,16 | -85,0 | 31,6 | -45,0 |

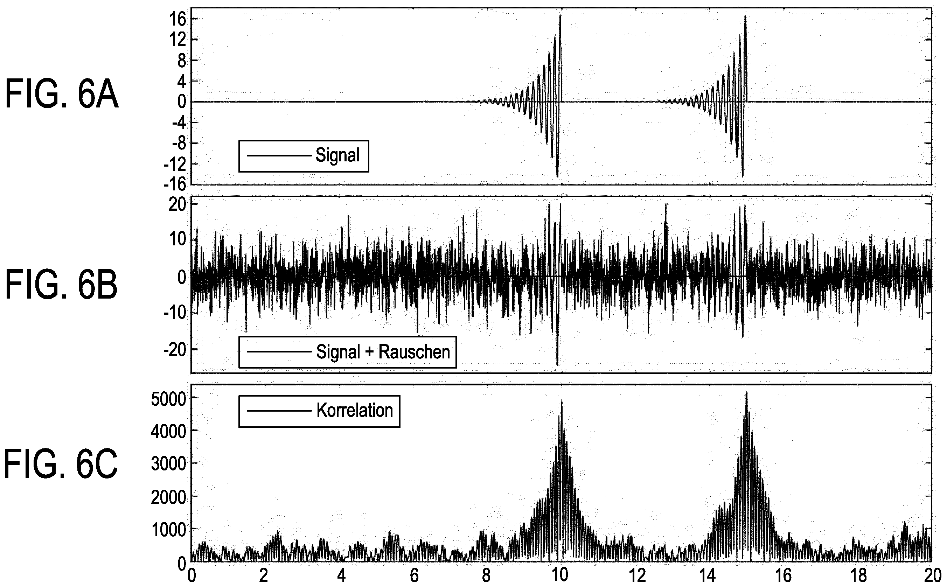

Diese Werte sind der Veröffentlichung FNA Vfg 1/2008 entnommen.
d) Appendix D, Seite 24, Emissionsgrenzen für Japan: Figur 6
e) Appendix E, Seite 25, Emissionsgrenzen für Korea: Figur 7
f) Appendix F, Seite 26, Emissionsgrenzen für Singapur, Figur 8

Jede einzelne Tabelle und jede einzelne Figur des genannten Dokuments von M. Ohanga, auf die vorstehend Bezug genommen wurde, definiert also die Anforderungen für eine jeweilige, entsprechende Ausführungsform des erfindungsgemäßen Empfängers und des erfindungsgemäßen Verfahrens, nämlich insofern als das passive Filter, welches den Korrelator bildet, eine Impulsantwort hat, die eine Fourier-Transformierten hat, deren Betrat im Quadrat als Funktion der Frequenz ein als spektrale Maske gemäß einer oder mehrerer der vordefinierten Anforderungen, auf die oben unter a) bis f) Bezug genommen ist, definiertes Amplitudenspektrum nicht überschreitet.

Das Leistungsspektrum der Fig. 3B weist im vorliegenden Ausführungsbeispiel ein breites Maximum im Bereich nahe 7 GHz auf. Mit gestrichelter Linie und dem Bezugszeichen FCC ist zum Vergleich die spektrale Maske gemäß FCC-Anforderungen (vgl. oben Anforderungen a) dargestellt. Durch geeignete Einstellung der Amplitude ist das Leistungsspektrum im Rahmen der behördlich vorgegebenen spektralen Masken, hier insbesondere gemäß FCC (Anforderungen gemäß a), oder aber in einem anderen Ausführungsbeispiel gemäß ECC (Anforderungen gemäß b) gehalten. Die Einstellung der Amplitude erfolgt, indem der Ausgangsverstärker der Sendeeinheit geeignet dimensioniert wird. Auf diese Weise wird die maximale Energie ausgesendet, ohne gegen FCC/ECC Schranken zu verstoßen.

Die spektrale Maske gemäß FCC sieht vor, dass unterhalb von 1,6 GHz die Amplitude des Leistungsspektrums auf Null abfallen muss. In dem Leistungsspektrum der Fig. 3 ist diese Grenze der FCC-Maske Bereich mit dem Bezugszeichen FCC1 gekennzeichnet. In dem vorliegenden Ausführungsbeispiel ist dieser Bereich durch eine zusätzliche Filterung unterdrückt. Eine solche Filterung kann durch bekannte Verfahren in der Sendeeinheit, z. B. notch filter, erreicht werden. Dadurch erfüllt die ausgesendete Impulsform zwar nicht mehr ganz genau die Bedingung, der zeitinvertierten Impulsantwort des passiven Filters gleich zu sein. Da aber der ausgeblendete Bereich prozentual nur wenig Energie enthält, ist die durch das passive Filter gelieferte Kreuzkorrelation nur unwesentlich verändert. Dies ist daran zu erkennen, dass eine Impulsform, welche dem derart zusätzlich gefilterten Spektrum entspricht nahezu identisch zu der nicht derart zusätzlich gefilterten Impulsform ist. Die zusätzlich gefilterte Impulsform ist zum Vergleich in Fig. 3 A als gestrichelte Linie dargestellt. Die Bedingung, dass die ausgesendete Impulsform der zeitinvertierten Impulsantwort des passiven Filters gleich sein soll, ist insofern im Sinne der vorliegenden Erfindung hinreichend genau erfüllt.

Fig. 3C zeigt in linearen Einheiten als Funktion der Zeit in Nanosekunden die Autokorrelationsfunktion der Impulsantwort h(t) aus Fig. 3A. Dieser Autokorrelationsfunktion entspricht das gefilterte Ausgangssignal am Ausgang des passiven Filters 106, wenn am Eingang des passiven Filters 106 ein Signal anliegt, das der zeitinvertierten Impulsantwort entspricht, also eine Impulsform des Typs p(t) = h(-t) hat.

Die wesentliche Aufgabe eines kohärenten Ultrabreitband-Empfängers, nämlich die Kreuzkorrelation eines Musterimpulses mit dem Empfangssignal zu ermitteln, wird im vorliegenden Ausführungsbeispiel durch das passive Filter 106 also besonders elegant und einfach implementiert. Allein das Durchlaufen des passiven Filters 106 wandelt das Empfangssignal in die benötigte Kreuzkorrelation. Nach einer geeigneten Verstärkung des von der Antenne gelieferten Empfangssignals im rauscharmen Verstärker 104 erzeugt das passive Filter 106 aus dem verstärkten Empfangssignal einen oszillierenden symmetrischen Korrelationspuls, wie er in Fig. 3C dargestellt ist, und zwar für jeden im empfangenen Ultrabreitband-Signal enthaltenden Ultrabreitband-Impuls.

Nachdem die Kreuzkorrelation auf diese neuartige Weise ermittelt ist, erfolgt eine Impulsdetektion sowie in nachfolgenden, hier nicht näher dargestellten Einheiten des Empfängers die weitere Verarbeitung, also die Demodulation der übermittelten Daten in üblicher Weise, wie es aus Ultrabreitband-Empfängern gemäß dem Stand der Technik bekannt ist. Solche bekannten Ultrabreitband-Empfänger verwenden jedoch vor der Demodulation im Unterschied zum vorliegenden Ultrabreitband-Empfänger einen digitalen Korrelator.

Je nach Anwendungsfall und nach zu berücksichtigender spektraler Maske kann die Dimensionierung der einzelnen Bauelemente des passiven Filters angepasst werden. In der Folge dessen ist auch senderseitig eine Anpassung an das empfängerseitige passive Filter vorzunehmen, um die passende Impulsform und spektrale Verteilung zu erzielen.

Als ein Beispiel einer solchen Anpassungsmöglichkeit an spezielle Übertragungsverhältnisse sei angenommen, dass schmalbandige Sender im für WLAN-Funkübertragung genutzten Frequenzband zwischen 5 und 6 GHz zu berücksichtigen sind. Hier können störende Interferenzen minimiert werden, indem zum einen die spektrale Breite des Maximums des Leistungsspektrums der Fig. 3B verringert und zum anderen das Maximum zu höheren Frequenzen verschoben wird. Eine reduzierte spektrale Breite wird zum Beispiel dadurch erreicht, dass ein größerer Wert als der oben genannte für den Widerstand R3 im Resonator 106.2 gewählt wird. Eine Verschiebung des Maximums kann durch eine geringere Kapazität des Kondensators C2 und/oder eine geringere Induktivität der Spule L im Resonator 106.2 erzielt werden. Auf diese Weise gelingt es, die spektrale Dichte im Bereich nahe 5,9 GHz soweit zu reduzieren, dass ein zusätzliches Kerb-Filter (Notch-Filter) im Bereich dieser Frequenz nur eine unbedeutende Verzerrung der Impulsantwort des passiven Filters hervorruft. Diese Verzerrung kann in praktischen Implementierungen vernachlässigt werden.

Eine weitere Option zur Variation des passiven Filters ist es, die Dimensionierung der Bauelemente des passiven Filters so zu gestalten, dass der Resonator 106.2 eine nur geringe Last für die vorgeschaltete Tiefpassstufe 106.1 bildet, indem R2 erhöht wird. Dies ermöglicht es, eine Impulsform zu erzielen, die sehr gut als das Produkt einer Sinuswelle mit einer Exponentialfunktion beschrieben werden kann. Eine solche Impulsform ist für eine einfache senderseitige Impulserzeugung gut geeignet, wie weiter unten erläutert wird.

Wie erläutert ist die gemäß der vorliegenden Erfindung verwendete Impulsform auf Seiten des Senders die Zeitinvertierte der Impulsantwort des passiven Filters 106. Diese Impulsform auf Seiten des Senders ist bei dieser Wahl der Komponenten im Wesentlichen eine Oszillation mit exponentiell ansteigender Amplitude, die bei Erreichen einer vorgegebenen Maximalamplitude abgeschnitten ist, also auf 0 zurückfällt, wenn die Welle nach einigen Perioden einen 0-Durchgang hat.

Die vorgeschlagene Architektur zum Empfang von Ultrabreitband-Impulsen benötigt entsprechende Impulsgeneratoren, welche in der entsprechenden Sendeeinheit eingesetzt werden. Die Auswertung der Korrelation mittels eines passiven Filters wie etwa in Fig. 2 dargestellt führt zu einer Impulsform, welche in etwa einer Sinuswelle entspricht, deren Einhüllende exponential ansteigt und dann in einem kurzen Zeitintervall auf Null abfällt. Charakteristische Parameter wie die Basisfrequenz und die Zeitkonstante der exponentiellen Einhüllenden werden durch die Wahl der Komponenten in Fig. 3 bestimmt. Es gibt verschiedene Möglichkeiten, solche Impulse zu generieren. Zum einen kann mittels einer geeigneten Schaltung ein Gesamtimpuls aus mehreren sukzessiven Wellenzyklen zusammengesetzt werden, wobei die Amplitude von jedem Zyklus beliebig gewählt werden kann. Des Weiteren kann eine exponentiell ansteigende Spannung unter Verwendung von Bauteilen mit nichtlinearer Kennlinie erzeugt werden, welche mit dem sinusförmigen Ausgang eines lokalen Oszillators multipliziert wird. Eine weitere Möglichkeit ist, einen Oszillator anschwingen zu lassen, wobei in der ersten Phase eine sinusförmige Schwingung mit exponentiell ansteigender Einhüllenden entsteht. Diese wird zu einem geeigneten Zeitpunkt nach Aktivierung des Oszillators abgeschaltet, um den Impuls zu erhalten. Diese Variante bietet sich insbesondere bei der Verwendung von längeren Impulsen, an wie weiter unten beschrieben. Nachfolgend wird eine mögliche Senderarchitektur anhand der Fig. 4 und Fig. 5 näher erläutert.

Fig. 4 zeigt ein vereinfachtes Blockschaltbild eines Ultrabreitband-Senders 200 zur Verwendung in einer Ultrabreitband-Kommunikations-Anordnung mit einem kohärenten Ultrabreitband-Empfänger gemäß der vorliegenden Erfindung. Die in Fig. 4 schematisch dargestellte Senderarchitektur ist insbesondere für die Erzeugung von Ultrabreitband-Impulsen zum Empfang durch einen Empfänger wie in Fig. 1 geeignet, der beispielsweise ein passives Filter 106 wie in Fig. 2 beinhaltet. Die hier dargestellte Senderarchitektur ist nur eine von vielen möglichen Architekturen eines geeigneten Ultrabreitband-Senders.

Der wesentliche, durch die vorliegende Erfindung beeinflusste Teil des Ultrabreitband-Senders betrifft die Impulserzeugung. Nur dieser Teil des Ultrabreitband-Senders 200 ist in Fig. 4 dargestellt. Auf weitere, an sich bekannte Einheiten wie beispielsweise eine Kodierungs- und Modulationseinheit ist in Fig. 4 der Einfachheit der Darstellung halber verzichtet worden. Nachfolgend wird zur Erläuterung des Ultrabreitband-Senders der Fig. 4 auch auf Fig. 5 Bezug genommen. Fig. 5 zeigt in den Teilfiguren 5A bis 5E verschiedene Signalformen in jeweils linearer Darstellung als Funktion der Zeit in einer gemeinsamen, unter Fig. 5E dargestellten Zeitskala. Diese Signalformen liegen im Ultrabreitband-Sender 200 an den in Fig. 4 entsprechend gekennzeichneten Positionen A bis E vor.

Im in Fig. 4 dargestellten Teil des Ultrabreitband-Senders 200 wird eine Impulsform erzeugt, die auf eine erfindungsgemäße Empfängerarchitektur zugeschnitten ist. Mit anderen Worten, der Ultrabreitband-Sender 200 ist so ausgelegt, dass die erzeugte und ausgesendete Impulsform eines Ultrabreitband-Impulses der Zeitinvertierten der Impulsantwort des empfängerseitigen passiven Filters entspricht. Diese Impulsantwort im vorliegenden Beispiel als Produkt einer Sinuswelle mit einer exponentiell abfallenden Hüllkurve darstellbar. Senderseitig wird dementsprechend die Zeitinvertierte dieser Impulsantwort durch Multiplizieren eines exponentiell ansteigenden Hüllkurven-Signals mit einem sinusförmigen Signals realisiert. Hierzu weist der Ultrabreitband-Sender 200 eine an sich bekannte Phasenregelschleife (engl. phase locked loop, PLL) 202 auf. Diese umfasst einen Phasenkomparator 205, an dessen Eingang zum einen ein Hochfrequenzsignal eines lokalen Oszillators 206 und zum anderen ein über zwei Frequenzteiler 204.1 und 204.2 rückgeführtes Signal anliegt. Am Ausgang eines spannungsgesteuerten Oszillators der PLL 202 liegt dann sinusförmiges Signal an. In Fig. 5A ist das an der Position A der Senderstruktur der Fig. 4 vorliegendes Sinussignal dargestellt.

Das Sinussignal an Position A wird im ersten Frequenzteiler 204.1 unter Verwendung eines geeigneten Divisors (im vorliegenden Fall 16) geteilt. An Position B in Fig. 4 hinter dem Frequenzteiler 204.1 ist ein in Fig. 5B dargestelltes Rechtecksignal abgegriffen, welches phasenstarr an die vom lokalen Oszillator 206 erzeugte Schwingung gekoppelt ist. In Reaktion auf ein Steuersignal, das von einer Steuereinheit 208 des Senders erzeugt wird, gibt eine steuerbare Torschaltung in Form einer digitalen Logikschaltung 210 eine einzelne Halbwelle der Rechteckpulsform aus Fig. 5B aus. Die an Position C der Fig. 4 entsprechend abgreifbare einzelne Halbwelle ist in Fig. 5C dargestellt.

Durch das Anliegen dieser einzelnen rechteckförmigen Halbwelle wird die Erzeugung eines exponentiell ansteigenden Spannungsimpulses in einer nachfolgenden Impulsformungseinheit 212 (engl. pulse shaping unit) aktiviert und die Impulsdauer gesteuert.

Die Impulsformungseinheit 212 kann auf unterschiedliche Weisen realisiert werden. Beispielsweise kann sie eine Halbleiterdiode enthalten. Eine Halbleiterdiode hat bekanntlich eine exponentielle Abhängigkeit des Stroms von der Spannung. Eine alternative Möglichkeit zur Realisierung der Impulserzeugungseinheit 212 ist die Verwendung einer Kombination eines Verstärkers und eines Oszillators mit positiver Rückkopplung.

Das am Ausgang der Impulsformungseinheit 212 (Signalposition D) vorliegende Signal ist in Fig. 5D dargestellt. Der exponentiell ansteigende Impuls bricht mit dem Ende des eingangsseitig anliegenden Rechteckimpulses ab.

In einem Multiplizierer 214 wird dieser exponentiell ansteigende Impuls als Hüllkurvensignal mit der von der phasenstarren Regelschleife erzeugten Sinusschwingung multipliziert. Am Ausgang des in Fig. 4 dargestellten Teils der Senderschaltung 200 (Position E) liegt demnach eine durch die Hüllkurve des exponentiellen ansteigenden Impulses modulierte Sinusschwingung an. Diese Signalform eines Ultrabreitband-Impulses ist in Fig. 5E dargestellt. Sie enthält im vorliegenden Beispiel acht Perioden der Sinusschwingung aus Fig. 5A.

In einer Weiterbildung der Senderstruktur der Fig. 4 ist zusätzlich ein Vergleicher vorgesehen (nicht dargestellt). Der Vergleicher unterstützt das Abschneiden des Impulses am ersten Nulldurchgang der Sinuswelle (Fig. 5A) nach Zurückschalten der rechteckförmigen Halbwelle (Fig. 5C) auf 0. Dadurch können Fehler aufgrund möglicher Verzögerungen kompensiert werden. Der erzeugte Ultrabreitband-Impuls sollte zeitlich möglichst präzise abgeschnitten sein, sobald die Sinuswelle nach Umschalten der rechteckförmigen Halbwelle der Fig. 5C auf 0 einen Nulldurchgang hat.

Eine alternative, hier nicht graphisch dargestellte Möglichkeit der Implementierung einer Impulserzeugung in einem für die vorliegende Erfindung geeigneten Sender beinhaltet die Erzeugung von beispielsweise acht Rechteckimpulsen in Reihe unter Verwendung von Ausgangssignalen von Frequenzteilern. Jeder dieser Rechteckimpulse nimmt in einer anderen Periode einen von 0 verschiedenen Wert an. Jeder Impuls kann dann die Amplitude des erzeugten Ultrabreitband-Impulses in der betreffenden Periode auf einfache Weise bestimmen. Die Amplituden der Rechteckimpulse sind so gewählt, dass sie die benötigte exponentiell ansteigende Hüllkurve produzieren.

Die zuvor geschilderten Ausführungsbeispiele betreffen ein Ultrabreitband-Kommunikationssystem bei dem ein sehr kurzer Impuls verwendet wird, der eine entsprechende breite spektrale Verteilung hat, die sich z. B. im Wesentlichen im Frequenzbereich von 3 GHz bis 10 GHz erstreckt. Es handelt sich bei diesem Frequenzbereich jedoch nur um ein Beispiel. Es könnten ganz anderen Frequenzbänder genutzt werden, z.B. im Bereich um 24GHz oder bei 60GHz.

Nachfolgend wird ein alternatives Ausführungsbeispiel erläutert, bei dem Impulse mit einer schmaleren Frequenzverteilung erzeugt werden. Dem liegt die Überlegung zugrunde, dass in Zukunft voraussichtlich die Anforderungen an die spektrale Verteilung von Ultrabreitband-Signalen restriktiver sein werden, um Interferenzen mit schon existierenden schmalbandigen Systemen wie beispielsweise WLAN zu vermeiden. Weiterhin erlauben Ultrabreitband-Signale mit einer schmaleren Frequenzverteilung die parallele Verwendung mehrere Sub-Bänder.

Eine Lösung zur Erzielung eines schmaleren Frequenzspektrums kann empfängerseitig durch eine Reduzierung der Dämpfung im Resonator 106.2 der Schaltung des passiven Filters 106 (vergleiche Fig. 2) erzielt werden. Hierzu wird also der Widerstand R3 der Schaltung aus Fig. 2 im Vergleich zum oben genannten Wert erhöht. Die Impulsantwort des passiven Filters nähert sich dann dem Produkt einer Sinuswelle bei der Resonanzfrequenz und einer exponentiell abfallenden Hüllkurve an. Fig. 6 zeigt in Fig. 6A zwei dementsprechend erzeugte Sendeimpulse, die also der Zeitinvertierten der so modifizierten Impulsantwort des passiven Filters des Empfängers entsprechen. Jeder dieser beiden Impulse ist in etwa 2 ns lang und enthält etwa 10 bis 12 Oszillationen. Das Frequenzspektrum eines solchen Ultrabreitband-Impulses hat eine Frequenzbandbreite von 1 bis 2 GHz. Fig. 6B zeigt ein Ultrabreitband-Signal, das empfängerseitig detektiert wird, wenn auf der Übertragungsstrecke über die Luftschnittstelle zu den ausgesandten Ultrabreitband-Impulsen der Fig. 6A weißes Gaußsches Rauschen hinzuaddiert ist. Solches Rauschen hat in vielen Situationen eine Amplitude, die wie vorliegend dargestellt groß genug ist, um die das Nutzsignal bildenden Ultrabreitband-Impulse zu verdecken. Wie Fig. 6C zeigt, ermöglicht der erfindungsgemäße Verfahren jedoch durch Bestimmung der Kreuzkorrelation mittels passiver Filterung in dem erfindungsgemäßen Empfänger, die Position der ursprünglich erzeugten Impulse anhand des vom passiven Filter erzeugten Kreuzkorrelationssignals zu identifizieren. Eine Energiedetektion am Ausgang des passiven Filters wird die Signale dann mit hoher Zuverlässigkeit identifizieren. Dies wäre allein anhand des empfangenen Signals der Fig. 6B nicht möglich.

Weiterbildungen und Abwandlungen der vorliegenden Erfindung sind möglich. So ist es bei Fehlen entsprechender behördlicher Vorgaben nicht notwendig, eine spektrale Maske einzuhalten. Eine Abwandlung der vorliegenden Erfindung bildet daher ein kohärenter Ultrabreitband-Empfänger zur Detektion von Ultrabreitbandimpulsen in einem empfangenen Ultrabreitbandsignal, umfassend:
- eine Empfangseinheit, die ausgebildet ist, ein Ultrabreitbandsignal, insbesondere mit einer Frequenzbandbreite von mindestens 1 GHz, über eine Luftschnittstelle zu empfangen und in ein Empfangssignal zu wandeln;
- einen Korrelator in Form eines passiven Filters, dem das Empfangssignal, insbesondere nach geeigneter Verstärkung, zugeführt ist und das ausgebildet ist, das Empfangssignal mit alleiniger Hilfe passiver Bauelemente zu filtern und an seinem Ausgang als ein entsprechend gefiltertes Empfangssignal auszugeben, wobei das passive Filter eine Impulsantwort aufweist, die eine Fourier-Transformierten hat, deren Zeitinvertierte eine vom Ultrabreitband-Empfänger detektierbare Impulsform eines Ultrabreitbandimpulses definiert,
- wodurch das passive Filter ausgebildet ist, als das gefilterte Empfangssignal ein Kreuzkorrelationssignal als Funktion der Zeit bezüglich eines Zeitbezugspunktes zu erzeugen und auszugeben, das einer Kreuzkorrelation des Empfangssignals mit der detektierbaren Impulsform des Ultrabreitbandimpulses entspricht.

## Patentansprüche

1. Kohärenter Ultrabreitband-Empfänger zur Detektion von Ultrabreitbandimpulsen in einem empfangenen Ultrabreitbandsignal, umfassend:
- eine Empfangseinheit, die ausgebildet ist, ein Ultrabreitbandsignal mit einer Frequenzbandbreite von mindestens 1 GHz über eine Luftschnittstelle zu empfangen und in ein Empfangssignal zu wandeln;
- einen Korrelator in Form eines passiven Filters, dem das Empfangssignal zugeführt ist und das ausgebildet ist, das Empfangssignal mit alleiniger Hilfe passiver Bauelemente, also Widerständen, Kondensatoren oder Spulen, zu filtern und an seinem Ausgang als ein entsprechend gefiltertes Empfangssignal auszugeben, wobei das passive Filter mindestens einen Tiefpassfilter und einen mit dem Tiefpassfilter gekoppelten gedämpften Resonator umfasst und eine Impulsantwort hat,
deren Zeitinvertierte eine vom Ultrabreitband-Empfänger detektierbare Impulsform eines Ultrabreitbandimpulses definiert,
- wodurch das passive Filter ausgebildet ist, als das gefilterte Empfangssignal ein Kreuzkorrelationssignal als Funktion der Zeit bezüglich eines Zeitbezugspunktes zu erzeugen und auszugeben, das einer Kreuzkorrelation des Empfangssignals mit der detektierbaren Impulsform des Ultrabreitbandimpulses entspricht.

2. Ultrabreitband-Empfänger nach Anspruch 1, der zusätzlich eine Pulsidentifikationseinheit umfasst, welcher das Kreuzkorrelationssignal zugeführt ist und die ausgebildet ist, eine für eine Amplitude des Kreuzkorrelationssignals als Funktion der Zeit repräsentative Messgröße zu ermitteln und ein Maximum der Amplitude des Kreuzkorrelationssignals sowie bezüglich des Zeitbezugspunktes einen Zeitpunkt zu ermitteln und auszugeben, an dem das Maximum der Amplitude des Kreuzkorrelationssignals auftritt.

3. Ultrabreitband-Empfänger nach Anspruch 1, bei dem der Resonator auf eine Mittenfrequenz der spektralen Maske abgestimmt ist.

4. Ultrabreitband-Empfänger nach einem der vorstehenden Ansprüche, bei dem die Zeitinvertierte der Impulsantwort des passiven Filters einem Produkt einer Sinuswelle mit einer als Funktion der Zeit ansteigenden Exponentialfunktion entspricht.

5. Ultrabreitband-Kommunikations-Anordnung, umfassend
- einen kohärenten Ultrabreitband-Empfänger zur Detektion von Ultrabreitbandimpulsen in einem empfangenen Ultrabreitbandsignal nach einem der vorstehenden Ansprüche;
- einen Ultrabreitband-Sender, der ausgebildet ist, Ultrabreitbandimpulse zu erzeugen, die eine Impulsform haben, deren Fourier-Transformierte einen zum Quadrat genommenen Betrag hat, der, dargestellt als spektrale Leistungsdichte als Funktion der Frequenz, eine vordefinierte spektrale Maske, insbesondere eine spektrale Maske gemäß FCC- oder ECC-Anforderungen nicht überschreitet, und die eine Zeitinvertierte der Impulsantwort des passiven Filters des Ultrabreitband-Empfängers darstellt.

6. Ultrabreitband-Kommunikations-Anordnung nach Anspruch 5, bei der der Ultrabreitband-Sender umfasst:
- eine Impulserzeugungseinheit, die ausgebildet ist, in Reaktion auf ein von einer Steuereinheit empfangenes Steuersignal einen Impuls einer vordefinierten Hüllkurven-Signalform zu erzeugen,
- eine Modulationseinheit, die ausgebildet ist, die von der Impulserzeugungseinheit erzeugte Hüllkurven-Signalform mit einer sinusförmigen Signalform zu modulieren.

7. Ultrabreitband-Kommunikations-Anordnung nach Anspruch 6, bei der
- die Modulationseinheit des Senders eine mit einem lokalen Oszillator verbundene Phasenregelschleife enthält,
- eine Frequenzteilereinheit der Phasenregelschleife zwei in Reihe geschaltete Frequenzteiler aufweist, zwischen denen ein Rechteckpuls-Signal abgreifbar ist,
- eine mit der Phasenregelschleife verbundene steuerbare Torschaltung ausgebildet ist, in Reaktion auf das Steuersignal eine einzelne Halbwelle des Rechteckpuls-Signals an ihrem Ausgang auszugeben;
- eine mit der Torschaltung verbundene Impulsformungseinheit ausgebildet ist, eine vordefinierte Impulsform auszugeben, deren Dauer mit der zeitlichen Dauer des Anliegens der Halbwelle identisch ist,
- und bei der die Modulationseinheit einen Multiplizierer aufweist, der ausgebildet ist, an seinem Ausgang ein Produktsignal auszugeben, das dem Produkt der von der Impulsformungseinheit ausgegebenen Impulsform mit einem von der Phasenregelschleife erzeugten harmonisch oszillierenden Signal entspricht.

8. Verfahren zur Kommunikation von Ultrabreitband-Impulsen, umfassend
- Bereitstellen eines Empfängers nach einem der Ansprüche 1 bis 4;
- nachfolgend: senderseitiges Erzeugen und Ausgeben des Ultrabreitband-Impulses in Form eines Ultrabreitband-Signals über eine senderseitige Luftschnittstelle, der eine Impulsform als Funktion der Zeit hat, deren Fourier-Transformierte einen zum Quadrat genommenen Betrag hat, der, dargestellt als spektrale Leistungsdichte als Funktion der Frequenz, eine vordefinierte spektrale Maske, insbesondere eine spektrale Maske gemäß FCC- oder ECC-Anforderungen nicht überschreitet, und die die Zeitinvertierte der Impulsantwort des passiven Filters des Empfängers darstellt,
- Empfangen des Ultrabreitband-Signals und Filtern eines daraus erzeugten Empfangssignals mit Hilfe des passiven Filters, wobei das passive Filter mindestens einen Tiefpassfilter und einen mit dem Tiefpassfilter gekoppelten gedämpften Resonator umfasst und das Empfangssignal mit alleiniger Hilfe passiver Bauelemente, also Widerständen, Kondensatoren oder Spulen filtert und an seinem Ausgang ein entsprechend gefiltertes Empfangssignal ausgibt, das als Funktion der Zeit bezüglich eines Zeitbezugspunktes einer Kreuzkorrelation des Empfangssignals mit der detektierbaren Impulsform des Ultrabreitbandimpulses entspricht.

9. Verfahren nach Anspruch 8, zusätzlich umfassend:
- Ermitteln von Werten einer für eine Amplitude des Kreuzkorrelationssignals als Funktion der Zeit repräsentativen Messgröße und Identifizieren eines Maximums der Amplitude des Kreuzkorrelationssignals und eines Zeitpunkts bezüglich des Zeitbezugspunktes, an dem das Maximum der Amplitude des Kreuzkorrelationssignals auftritt.

## Claims

1. Coherent ultra-broadband receiver for the detection of ultra-broadband pulses in a received ultra-broadband signal, comprising:
- a reception unit, which is designed to receive an ultra-broadband signal with a frequency bandwidth of at least 1 GHz via a wireless interface and to convert it into a reception signal;
- a correlator in the form of a passive filter to which the reception signal is supplied and which is configured to filter the reception signal with the sole help of passive components, that is resistors, capacitors or solenoids, and to output it at its output as an accordingly filtered reception signal, wherein the passive filter comprises at least one lowpass filter and one damped resonator coupled with the lowpass filter and a pulse response, of which the time invert defines a pulse form of an ultra-broadband pulse which can be detected by the ultra-broadband receiver,
- as a result of which the passive filter is configured to generate and to output, as the filtered reception signal, a cross-correlation signal as a function of time with respect to a reference instant, which is equal to a cross-correlation of the reception signal with the detectable pulse form of the ultra-broadband pulse.

2. Ultra-broadband receiver according to claim 1, which additionally comprises a pulse identification unit to which the cross-correlation signal is supplied and which is configured to detect a measurement variable representative for an amplitude of the cross-correlation signal as a function of time and to detect and to output a maximum of the amplitude of the cross-correlation signal and a point in time with respect to the reference instant at which the maximum of the amplitude of the cross-correlation signal occurs.

3. Ultra-broadband receiver according to claim 1, wherein the resonator is adjusted to a mean frequency of the spectral mask.

4. Ultra-broadband receiver according to any of the preceding claims, wherein the time invert of the pulse response of the passive filter is equal to a product of a sine wave with an exponential function increasing as a function of time.

5. Ultra-broadband receiver arrangement, comprising
- a coherent ultra-broadband receiver for the detection of ultra-broadband pulses in a received ultra-broadband signal according to any of the preceding claims;
- an ultra-broadband transmitter which is configured to generate ultra-broadband pulses which have a pulse form, the Fourier transform of which has an amount squared which, shown as a spectral power density as a function of the frequency, does not overshoot a predetermined spectral mask, in particular a spectral mask according to FCC or ECC requirements, and which constitutes a time invert of the pulse response of the passive filter of the ultra-broadband receiver.

6. Ultra-broadband communication arrangement according to claim 5, wherein the ultra-broadband transmitter comprises:
- a pulse generating unit which is configured in reaction to a control signal received by a control unit to generate a pulse of a predefined envelope curve signal form,
- a modulation unit which is configured to modulate with a sinusoidal signal form the envelope curve signal form generated by the pulse generating unit.

7. Ultra-broadband communication arrangement according to claim 6, wherein:
- the modulation unit of the transmitter contains a phase control loop connected with a local oscillator,
- a frequency divider unit of the phase control loop has two frequency dividers connected in series, between which a rectangular pulse signal can be tapped,
- a controllable gate circuit connected to the phase control loop is configured in reaction to the control signal to output one single half wave of the rectangular pulse signal at its output;
- a pulse shaping unit connected with the gate circuit is configured to output a predefined pulse form, the duration of which is identical to the chronological duration of the application of the half wave,
- and wherein the modulation unit has a multiplier which is configured to output at its output a product signal which is equal to the product of the pulse form output from the pulse shaping unit and an harmonically oscillating signal generated by the phase control loop.

8. Method for the communication of ultra-broadband pulses, comprising
- provision of a receiver according to any of claims 1 to 4;
- hereinafter: transmitter-side generation and output of the ultra-broadband pulse in the form of an ultra-broadband signal via a transmitter-side wireless interface, which has a pulse form as a function of time, the Fourier transform of which has an amount squared which, shown as a spectral power density as a function of the frequency, does not overshoot a predetermined spectral mask, in particular a spectral mask according to FCC or ECC requirements, and which constitutes a time invert of the pulse response of the passive filter of the ultra-broadband receiver,
- reception of the ultra-broadband signal and filtering of a reception signal generated therefrom with the help of the passive filter, wherein the passive filter comprises at least one lowpass filter and one damped resonator coupled with the lowpass filter and filters the reception signal with the sole help of passive components, that is resistors, capacitors or solenoids, and outputs at its output an accordingly filtered reception signal, which as a function of time with respect to a reference instant is equal to a cross-correlation of the reception signal with the detectable pulse form of the ultra-broadband pulse.

9. Method according to claim 8, additionally comprising
detection of values of a measurement variable representative for an amplitude of the cross-correlation signal as a function of time, and identification of a maximum of the amplitude of the cross-correlation signal and a point in time with respect to the reference instant at which the maximum of the amplitude of the cross-correlation signal occurs.

## Revendications

1. Récepteur cohérent à bande ultra-large pour la détection d'impulsions à bande ultra-large dans un signal à bande ultra-large reçu, comprenant :
- une unité de réception, qui est conçue pour recevoir un signal à bande ultra-large avec une largeur de bande de fréquence d'au moins 1 GHz par l'intermédiaire d'une interface aérienne et le convertir en un signal de réception ;
- un corrélateur sous la forme d'un filtre passif, dans lequel le signal de réception est introduit et qui est conçu pour filtrer le signal de réception au moyen de composants passifs uniquement, donc des résistances des condensateurs ou des bobines et de l'émettre, à sa sortie, sous la forme un signal de réception filtré de manière correspondante, le filtre passif comprenant au moins un filtre passe-bas et un résonateur amorti couplé avec le filtre passe-bas et présente une réponse impulsionnelle dont l'inverse temporel définit une forme d'impulsion à bande ultra-large détectable par le récepteur à bande ultra-large,
- le filtre passif étant donc conçu pour générer et émettre, sous la forme du signal de réception filtré, un signal de corrélation croisée en fonction du temps par rapport à un moment de référence, qui correspond à une corrélation croisée du signal de réception avec la forme d'impulsion à bande ultra-large détectable.

2. Récepteur à bande ultra-large selon la revendication 1, qui comprend en outre une unité d'identification d'impulsion dans laquelle est introduit le signal de corrélation croisée et qui est conçue pour déterminer une grandeur de mesure représentative d'une amplitude du signal de corrélation croisée en fonction du temps et de déterminer et d'émettre un maximum de l'amplitude du signal de corrélation croisée ainsi qu'un moment, par rapport au moment de référence, auquel le maximum de l'amplitude du signal de corrélation croisée apparaît.

3. Récepteur à bande ultra-large selon la revendication 1, dans lequel le résonateur est ajusté à une fréquence centrale du masque spectral.

4. Récepteur à bande ultra-large selon l'une des revendications précédentes, dans lequel l'inverse temporel de la réponse impulsionnelle du filtre passif correspond à un produit d'une onde sinusoïdale avec une fonction exponentielle croissante en fonction du temps.

5. Disposition de communication à bande ultra-large comprenant :
- un récepteur à bande ultra-large pour la détection d'impulsions à bande ultra-large dans un signal à bande ultra-large reçu, selon l'une des revendications précédentes ;
- un émetteur à bande ultra-large qui est conçu pour générer des impulsions à bande ultra-large qui présentent une forme d'impulsion dont la transformée de Fourier a une valeur absolue prise au carré qui, représentée sous la forme d'une densité de puissance spectrale en fonction de la fréquence, ne dépasse pas un masque spectral prédéfini, plus particulièrement un masque spectral selon des exigences FCC ou ECC et qui représente un inverse temporel de la réponse impulsionnelle du filtre passif du récepteur à bande ultra-large.

6. Disposition de communication à bande ultra-large selon la revendication 5, dans laquelle l'émetteur à bande ultra-large comprend :
- une unité de génération d'impulsions qui est conçue pour générer, en réaction à un signal de commande reçu en provenance d'une unité de commande, une impulsion avec une forme de signal à courbe enveloppe prédéfinie,
- une unité de modulation qui est conçue pour moduler la forme de signal à courbe enveloppe générée par l'unité de génération d'impulsions avec une forme de signal sinusoïdale.

7. Disposition de communication à bande ultra-large selon la revendication 6, dans laquelle
- l'unité de modulation de l'émetteur contient une boucle de régulation de phase reliée avec un oscillateur local,
- une unité à diviseurs de fréquence de la boucle de régulation de phase comprend deux diviseurs de fréquence branchés en série, entre lesquels un signal à impulsions rectangulaires peut être capté,
- un circuit à porte contrôlable, relié avec la boucle de régulation de phase, est conçu pour émettre, en réaction au signal de commande, une seule demie-onde du signal à impulsions rectangulaires à sa sortie ;
- une unité de formation d'impulsions, reliée avec le circuit de porte, est conçue pour générer une forme d'impulsion prédéfinie dont la durée est identique à la durée de l'application de la demie-onde,
- et dans laquelle l'unité de modulation comprend un multiplicateur qui est conçu pour générer, à sa sortie, un signal de produit qui correspond au produit de la forme d'impulsion générée par l'unité de formation d'impulsion avec un signal oscillant de manière harmonique généré par la boucle de régulation de phase.

8. Procédé de communication d'impulsions à bande ultra-large, comprenant
- la mise à disposition d'un récepteur selon l'une des revendications 1 à 4 ;
- ensuite : génération et émission, côté émetteur, de l'impulsion à bande ultra-large sous la forme d'un signal à bande ultra-large par l'intermédiaire d'une interface aérienne côté émetteur, qui présente une forme d'impulsion en fonction du temps dont la transformée de Fourier présente une valeur absolue prise au carré, représentée sous la forme d'une densité de puissance spectrale en fonction de la fréquence, ne dépasse pas un masque spectral prédéfini, plus particulièrement un masque spectral selon les exigences FCC ou ECC et qui représente l'inverse temporel de la réponse impulsionnelle du filtre passif du récepteur,
- la réception du signal à bande ultra-large et le filtrage d'un signal de réception généré à partir de celui-ci à l'aide du filtre passif, le filtre passif comprenant au moins un filtre passe-bas et un résonateur amorti couplé avec le filtre passe-bas et filtrant le signal de réception uniquement à l'aide de composants passifs, donc des résistances, des condensateurs ou des bobines, et émettant, à sa sortie, un signal de réception filtré de manière correspondante, qui correspond, en fonction du temps par rapport à un moment de référence, à une corrélation croisée du signal de réception avec la forme d'impulsion détectable de l'impulsion à bande ultra-large.

9. Procédé selon la revendication 8, comprenant en outre :
- la détermination de valeurs d'une grandeur de mesure représentative d'une amplitude du signal de corrélation croisée en fonction du temps, et l'identification d'un maximum de l'amplitude du signal de corrélation croisée et d'un moment par rapport au moment de référence, auquel le maximum de l'amplitude du signal de corrélation croisée apparaît.
